# FASCICULE DE BREVET EUROPEEN

(11) **EP 3 247 940 B1**
(45) Date de publication et mention de la délivrance du brevet: **02.10.2019**
(21) Numéro de dépôt: 16701013.1
(22) Date de dépôt: 19.01.2016
(51) Int. Cl.: F23C 5/32

(54) **MODULE DE COMBUSTION OFFRANT UNE COMBUSTION DES GAZ AMÉLIORÉE**
VERBRENNUNGSEINHEIT FÜR EINE VERBESSERTE GASENVERBRENNUNG
COMBUSTION MODULE FOR AN IMPROVED COMBUSTION OF GASES

(30) Priorité: 20.01.2015 FR 1550448
(43) Date de publication de la demande: 29.11.2017
(73) Titulaire: Commissariat à l'Énergie Atomique et aux Énergies Alternatives, 75015 Paris (FR); Universita'Degli Studi di Roma "La Sapienza", 00185 Roma (IT)
(72) Inventeur: OLLIER, Emmanuel, 38000 Grenoble (FR); MINOTTI, Angelo, 00184 Rome (IT)
(74) Mandataire: Brevalex
(86) Numéro de dépôt international: PCT/EP2016/051024
(87) Numéro de publication internationale: WO 2016/116450

(56) Documents cités:
- EP-A2- 1 193 443
- GB-A- 1 004 435
- GB-A- 1 207 275
- US-A1- 2009 220 906

## Description

### DOMAINE TECHNIQUE ET ART ANTÉRIEUR

La présente invention se rapporte à un module de combustion offrant une combustion des gaz améliorée et un système solaire hybride comportant au moins un tel module de combustion.

Il existe de dispositifs de production d'électricité comportant un module de combustion et un module thermoélectrique, la face chaude du module thermoélectrique étant en contact avec l'une des faces du module de combustion. En brûlant un ou des gaz dans le module de combustion, la face du module thermoélectrique en contact avec le module de combustion est échauffée, un gradient de température apparaît dans le module thermoélectrique, il y a alors production d'électricité.

Un exemple de tel dispositif est décrit dans le document US 7 862 331.

Le module de combustion comporte une chambre alimentée en gaz par au moins un tuyau d'alimentation, les gaz de combustion sont évacués par au moins un conduit d'évacuation.

Le matériau du module présente une très bonne conductivité thermique puisque l'on souhaite utiliser la chaleur produite dans le module, à l'extérieur du module.

Le document WO2014/048992 décrit un dispositif solaire hybride de production d'électricité comportant un corps dont une première face est soumise au rayonnement solaire et une deuxième face est en contact avec un générateur thermoélectrique, et une ou des chambres de combustion entre la première face et la deuxième face, cette chambre de combustion forme une source de chaleur additionnelle capable de compenser les variations du flux solaire. Dans ce type de dispositif, on souhaite pouvoir atteindre une température de l'ordre de 800°C au moins.

EP1193443 A2, GB1004435 A, US 2009220906 A1 et GB1207275 A divulguent différents systèmes de combustion.

On souhaite obtenir un module de combustion présentant un échauffement optimisé du corps, notamment de la face du corps en contact avec le module thermoélectrique.

Les chambres de combustion sont généralement tubulaires. Les gaz à brûler sont injectés par une extrémité dans l'axe de chacun des chambres et les gaz de combustion sont évacués par l'autre extrémité dans l'axe de chacune des chambres. Ces chambres présentent des dimensions faibles, de l'ordre de quelques cm de longueur.

Or il a été constaté que la combustion des gaz dans ce type de chambre n'était pas toujours complète, notamment dans le cas de la combustion du méthane ou de biogaz. Il en résulte que l'efficacité de la combustion pour échauffer le corps du module n'est pas optimale. Le transfert thermique entre les gaz lors de la combustion et le corps n'est pas non plus optimal.

### EXPOSÉ DE L'INVENTION

C'est par conséquent un but de la présente invention d'offrir un module de combustion offrant une efficacité de fonctionnement améliorée.

Le but énoncé ci-dessus est atteint par un module de combustion réalisé selon la revendication 1.

En mettant en oeuvre au moins une telle chambre, les gaz destinés à la combustion ont un mouvement tourbillonnaire dans la chambre ce qui allonge le temps de séjour des gaz dans la chambre, ce qui permet d'obtenir une combustion des gaz complète ou presque complète. Par ailleurs, le mouvement turbulent des gaz augmente les échanges thermiques entre les gaz et la paroi de la chambre de combustion.

En d'autres termes, la chambre de combustion est configurée de sorte à créer une turbulence des gaz dans celle-ci.

La présente invention est particulièrement intéressante dans le cas de modules de petite taille dans lesquels la ou les chambres de combustion a ou ont une longueur limitée, qui n'est pas suffisante pour obtenir une combustion complète ou quasi-complète dans le cas de chambres de combustion habituellement mis en oeuvre dans ce type de module.

De manière avantageuse, le module comporte au moins deux chambres de combustion à turbulence disposées l'une à côté de l'autre.

Les chambres de combustion peuvent avantageusement être alimentées en série ou en parallèle, ce qui réduit le nombre de connexions à réaliser, les pertes thermiques sont alors réduites et le coût de fabrication est abaissé.

De manière préférée, le corps comporte une première partie centrale en matériau présentant une bonne conductivité thermique et deux deuxièmes parties longitudinales situées à chacune des extrémités longitudinales de la première partie centrale et comportant les extrémités longitudinales de la ou des chambres de combustion. Les pertes thermiques au niveau des extrémités longitudinales de la ou des chambres de combustion sont alors réduites. En outre, la température au niveau des tubes d'alimentation en gaz se connectant aux deuxièmes parties longitudinales est réduite par rapport à celle dans le corps, ce qui réduit notablement, voire supprime les risques d'auto-inflammation dans les tubes d'alimentation.

La présente invention a alors pour objet un module de combustion.

Le module peut comprendre un deuxième canal d'alimentation de la chambre de combustion ou de chaque chambre de combustion au niveau de la première extrémité longitudinale de la chambre de combustion ou de chaque chambre de combustion. De manière très avantageuse, le deuxième canal d'alimentation est disposé par rapport à la surface latérale de sorte que le au moins un gaz injecté dans la chambre soit injecté sensiblement tangentiellement à la surface latérale et le canal d'évacuation est orientée sensiblement tangentiellement à la surface latérale.

De préférence, le corps est réalisé en un matériau ayant une conductivité thermique supérieure à 100 W/mK à température ambiante.

Dans un autre exemple de réalisation, le corps comporte une partie de combustion en un matériau bon conducteur thermique, de préférence ayant une conductivité thermique supérieure à 100 W/m.K à température ambiante, ladite partie de combustion comprenant la zone de combustion, le corps comportant également deux parties d'extrémité en un matériau présentant une conductivité thermique sensiblement plus faible que la partie de combustion, chacune des parties d'extrémité comportant une extrémité longitudinale de la chambre de combustion ou de chaque chambre de combustion La ou les parties d'extrémité peut ou peuvent être emboitée(s) sur la partie de combustion et/ou peut ou peuvent être solidarisée(s) à celle-ci par brasage ou soudage.

La partie de combustion est en SiC et la ou les parties d'extrémité est ou sont en zircone par exemple.

De manière avantageuse, la surface latérale de la chambre de combustion comporte au moins une rainure hélicoïdale.

Le rapport entre la longueur de la chambre de combustion ou de chaque chambre de combustion et le diamètre de la chambre de combustion ou de chaque chambre de combustion est de préférence compris entre 2 et 10.

Selon une caractéristique additionnelle, le corps peut comporter au moins une entrée de connexion destinée à être connectée à au moins une source d'au moins un gaz et des moyens d'alimentation en parallèle des chambres de combustion connectées à l'entrée de connexion. En variante, les chambres de combustion sont connectées en série.

Le corps peut comporter une sortie de connexion destinée à être connectée à une zone de récupération des gaz de combustion et des moyens d'évacuation connectant les canaux d'évacuation à la sortie d'évacuation.

Une partie d'extrémité peut comporter les premières extrémités longitudinales de toutes les chambres de combustion, ou une partie d'extrémité peut comporter la première extrémité d'une chambre de combustion et les deuxièmes extrémités des autres chambres de combustion ou des premières extrémités d'une partie des chambres de combustion et des deuxièmes extrémités de l'autre partie des chambres de combustion.

La présente invention a également pour objet un dispositif de combustion comportant au moins un module selon la présente invention, une source de combustible et une source de comburant. La source de combustible peut être connectée au premier canal d'alimentation ou au deuxième canal d'alimentation de la chambre de combustion ou de chaque chambre de combustion et la source de comburant peut être connectée au deuxième canal d'alimentation ou au premier canal d'alimentation de la chambre de combustion ou de chaque chambre de combustion respectivement.

Par exemple, la source de combustible est une source de H₂ et/ou de CH₄ et/ou de biogaz et la source de comburant est une source d'oxygène ou d'air.

Le dispositif de combustion peut comporter des moyens de prémélange du comburant et du combustible connectés au premier canal d'alimentation.

La présente invention a également pour objet un système solaire hybride comportant des moyens de concentration du rayonnement solaire, au moins un module de combustion selon l'invention ou un dispositif de combustion selon l'invention, le module ou le dispositif étant disposé de sorte que les rayonnement concentré éclaire une face du corps et des moyens de conversion d'une énergie thermique en électricité sur une face opposée à celle éclairée par le rayonnement solaire concentré, et des moyens de commande de la combustion dans le module de combustion en fonction du rayonnement solaire concentré.

Les moyens de concentration du rayonnement solaire comportent de préférence au moins un miroir ou une lentille de Fresnel.

Les moyens de conversion d'une énergie thermique en électricité comportent par exemple au moins un module thermoélectrique et/ou au moins une cellule thermophotovoltaïque.

### BRÈVE DESCRIPTION DES DESSINS

La présente invention sera mieux comprise à l'aide de la description qui va suivre et des dessins en annexe, sur lesquels :
- les figure 1A et 1B sont des vues de dessus et en coupe transversale respectivement d'un exemple de réalisation d'un module de combustion selon un premier mode de réalisation qui n'appartient pas à l'invention,
- les figures 2A et 2B sont des vues de dessus et en coupe transversale respectivement d'un exemple de réalisation d'un module de combustion selon un deuxième mode de réalisation qui appartient à l'invention,
- les figures 3A et 3B sont des vues de dessus et en coupe transversale respectivement d'un autre exemple de réalisation d'un module de combustion selon le deuxième mode de réalisation,
   les figures 4A à 4C sont des vues de dessus, de côté et en coupe transversale respectivement d'un autre exemple de réalisation d'un module de combustion selon le deuxième mode de réalisation,
- la figure 5 une vue en perspective d'une variante du module des figures 1A et 1B,
   la figure 6 une vue en perspective d'une autre variante du module des figures 1A et 1B,
- la figure 7 est une représentation schématique en perspective d'un exemple de chambre de combustion à turbulence pouvant être mis en oeuvre dans un module selon l'invention,
- la figure 8 est une représentation schématique d'un système solaire hybride mettant en oeuvre le module de combustion selon l'invention.

### EXPOSÉ DÉTAILLÉ DE MODES DE RÉALISATION PARTICULIERS

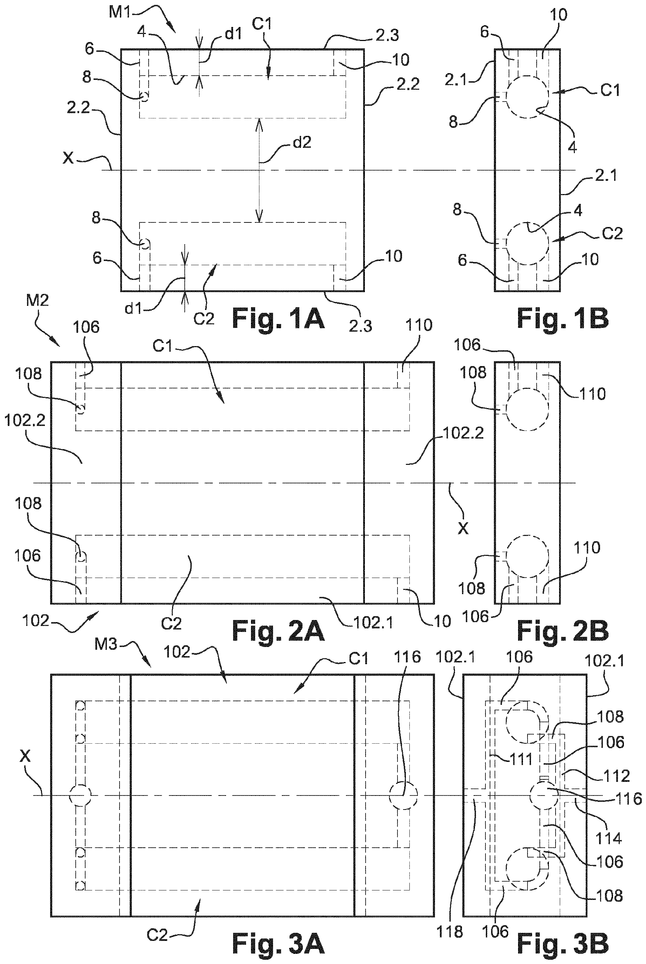

Sur les figures 1A et 1B, on peut voir un exemple de réalisation de module de combustion M1 selon un premier mode de réalisation, comportant un corps 2 comprenant deux chambres de combustion C1, C2. Dans l'exemple représenté, le corps 2 a la forme d'un parallélépipède rectangle comportant deux faces de plus grande surface 2.1, deux faces d'extrémité 2.2 et deux faces latérales 2.3. Le corps est réalisé en un matériau présentant une bonne conductivité thermique, de préférence supérieure à 50 W/m.K voire 100 W/m.K à température ambiante. Il s'agit par exemple d'un alliage métallique ou d'une céramique telle que le carbure de silicium SiC.

Il sera compris que pour des raisons de fabrication des chambres, le corps est de préférence réalisé en au moins deux parties.

Les chambres de combustion sont de type à turbulence, celles-ci sont généralement désignées "Swirling chambers" ou "Swirl chambers" en terminologie anglo-saxonne.

Une chambre de combustion de type à turbulence a une forme et une disposition des canaux d'alimentation et d'évacuation telles qu'elles créent des turbulences des gaz d'alimentation et des gaz résultant de la combustion dans la chambre de combustion.

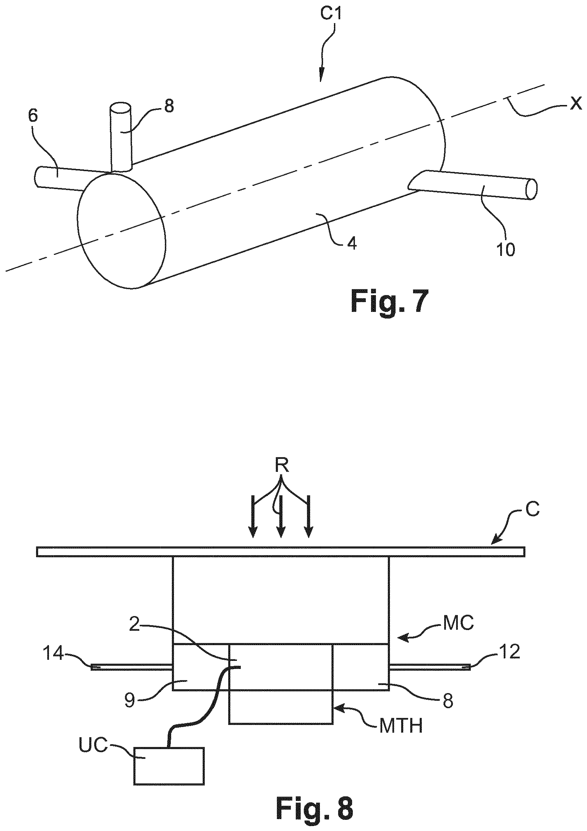

Sur la figure 7, on peut voir une vue en perspective d'un exemple de chambre de combustion à turbulence C1 mise en oeuvre dans la présente invention. La chambre de combustion comporte une chambre tubulaire 4 s'étendant le long d'un axe longitudinal X, un premier canal d'alimentation en gaz 6 et un deuxième canal d'alimentation en gaz 8 situés à une première extrémité longitudinale de la chambre 4 et un canal d'évacuation 10 des gaz de combustion situés à une deuxième extrémité longitudinale de la chambre 4, opposée à la première extrémité longitudinale. L'un des gaz fournis est un gaz combustible, par exemple H₂, et l'autre gaz fourni est un gaz comburant par exemple O₂ ou de l'air.

Le premier canal 6 est orienté sensiblement tangentiellement à la surface de la chambre tubulaire 4. Dans l'exemple représenté, le deuxième canal 8 présente un axe perpendiculaire à l'axe X mais non sécant avec l'axe X. Le canal d'évacuation 10 est orienté sensiblement tangentiellement à la surface de la chambre tubulaire.

En variante et comme cela sera décrit ultérieurement, les deux canaux 6 et 8 peuvent être orientés sensiblement tangentiellement à la surface de la chambre tubulaire 4.

En variante, le canal d'évacuation pourrait être orienté de manière non tangentielle à la surface de la chambre tubulaire.

En variante encore et comme cela sera décrit ultérieurement, la chambre de combustion peut ne comporter qu'un canal d'alimentation d'un mélange de gaz combustible et de gaz comburant, celui-ci étant orienté sensiblement tangentiellement à la surface de la chambre tubulaire.

Dans cet exemple de réalisation, les deux chambres de combustion C1 et C4 sont identiques et alimentées individuellement.

Comme on peut le voir sur la figure 1B, le premier canal d'alimentation 6 et le canal d'évacuation 10 débouchent dans une face latérale 2.3 et le deuxième canal d'alimentation 8 débouchent dans l'une des faces 2.1.

Dans l'exemple représenté et de manière avantageuse, chacune des chambres de combustion C1 et C2 est située près d'une face latérale, i.e. la distance d1 entre la face latérale et une chambre de combustion est sensiblement plus petite que la distance d2 entre les deux chambres de combustion C1 et C2. Par exemple, le rapport d2/d1 est compris entre 1 et 10, de préférence il est proche de 5. Cette disposition permet de compenser les pertes thermiques au niveau des faces latérales du corps et ainsi d'obtenir une température des faces 2.1 plus uniforme.

De manière également avantageuse, le diamètre des canaux d'alimentation 6, 8 et d'évacuation 10 sont faibles afin de réduire les pertes thermiques. Par ailleurs leur fabrication en est simplifiée notamment lorsqu'ils sont réalisés par usinage dans un matériau dur tel que la céramique. A titre d'exemple les canaux d'alimentation ont un diamètre de l'ordre de 1 mm, la chambre a un diamètre de l'ordre de 11 mm et de longueur de l'ordre de 33 mm.

De manière avantageuse, la surface intérieure de la ou des chambres de combustion peut être structurée pour favoriser l'apparition d'un mouvement tourbillonnaire, par exemple des rainures ou des nervures en forme de spirale pourraient être réalisées le long de l'axe de la chambre.

Les chambres de combustion sont destinées à une combustion en phase gazeuse. Mais elles pourraient aussi être du type catalytique, par exemple avec du platine déposé sur une partie au moins de la surface intérieure de la chambre.

Comme cela sera décrit par la suite, le module de combustion selon l'invention est adapté à la mise en oeuvre dans un système solaire hybride, une face 2.1 du corps du module étant éclairée par un rayonnement solaire concentré et la face opposée 2.1 étant par exemple en contact de un ou plusieurs modules thermoélectriques. La face 2.1 peut aussi être positionnée en face de cellules thermophotovoltaïques qui transforment le rayonnement infrarouge émis par la face chaude en électricité. Dans cette application, l'échauffement du corps par le rayonnement solaire concentré peut être suffisant pour initier la combustion.

En variante, la combustion peut aussi être initiée par un apport d'énergie thermique à l'aide d'un arc électrique ou d'une résistance chauffante.

Par exemple, les chambres de combustion peuvent par exemple être alimentées par un mélange H_{2/}air. En variante elles peuvent être alimentées par un mélange appauvri H₂/O₂.

En variante encore, les chambres de combustion peuvent être alimentées par un mélange H_{2/}CH₄ avec O₂ ou air.

En variante encore, les chambres de combustion peuvent être alimentées par un mélange H_{2/}CH_{4/}air, la quantité de CH₄ étant faible par rapport à celle de H₂.

En variante encore, les chambres de combustion peuvent être alimentées par un mélange CH₃OH/air. Il est alors préférable de préchauffer le mélange d'entrée, par exemple à au moins 200°C. Ce préchauffage peut avantageusement être obtenu par l'énergie solaire dans le cas d'un système de combustion mis en oeuvre dans un système solaire hybride.

Nous allons expliquer brièvement le fonctionnement du module des figures 1A et 1B.

La chambre est alimentée en H₂ par le premier canal 6 et en O₂ par le deuxième canal 8 par exemple. Du fait de l'orientation des canaux 6, 8 par rapport à la chambre, un mouvement tourbillonnaire des gaz apparaît dans la chambre. Ce mouvement a d'une part pour effet d'améliorer le mélange des gaz et donc de favoriser la combustion, d'autre part il augmente la durée de séjour des gaz H₂ et O₂, ce qui favorise une combustion complète. En outre les gaz de combustion chauds produits par la combustion ont également un mouvement tourbillonnaire, ce qui favorise les échanges thermiques avec la paroi de la chambre. Il en résulte un meilleur échauffement du matériau du corps 2 et donc de ses faces 2.1. Les gaz de combustion sont évacués par le canal d'évacuation 10.

Sur les figures 2A et 2B, on peut voir un exemple de réalisation d'un module de combustion M2 selon un deuxième mode de réalisation qui diffère de celui des figures 1A et 1B en ce que le corps 102 est composite, i.e. il comporte une partie centrale 102.1 en matériau à bonne conductivité thermique et deux parties d'extrémité longitudinales 102.2 présentant une conductivité thermique réduite, offrant ainsi une isolation thermique. Le matériau présentant une conductivité thermique réduite a par exemple une conductivité thermique inférieure à 30 W/m.K, de préférence inférieure à 5 W/m.K.

Les parties longitudinales 102.2 sont par exemple en zircone, en alumine, en mullite ou en tout autre matériau offrant une isolation thermique.

Les chambres de combustion sont réalisées en trois parties solidarisées les unes aux autres, par exemple par soudage ou par brasage par exemple avec du titane, du niobium, de l'or ou tout autre matériau adapté à la haute température.

La partie centrale comporte la chambre 104, l'une des parties d'extrémité 102.2 comporte les premier 106 et deuxième 108 canaux d'alimentation et l'autre partie d'extrémité comporte le canal d'évacuation 110.

La mise en oeuvre de parties d'extrémité isolantes permet de limiter les pertes thermiques au niveau des extrémités, ce qui permet de maintenir des conditions de combustion stables, ce qui est particulièrement intéressant pour le méthane ou les biogaz dont la combustion peut poser problème.

De plus, les conduits d'amenée des gaz sont branchés sur la partie longitudinale 102.2 comportant les canaux d'alimentation 106, 108. Ces conduits sont par exemple en acier. Ces conduits, lorsqu'ils sont branchés sur un corps entièrement conducteur thermique tel que le corps 2 des figures 1A et 1B, ont une température qui est proche de celle du corps, qui est bien supérieure à la température à laquelle un risque d'auto-inflammation apparaît, ce risque apparaît généralement pour une température supérieure à 600°C dans des conditions stoechiométriques. En connectant les conduits d'alimentation sur un matériau isolant thermique et non sur le matériau conducteur thermique, sa température est inférieure à 600°C, ce qui évite les risques d'auto-inflammation.

A titre d'exemple, les parties d'extrémités 102.2 ont une dimension le long de l'axe X égale à au moins 10 mm. Par ailleurs, au moins les canaux d'alimentation dans la partie longitudinale 102.2 sont réalisés de sorte qu'ils se trouvent suffisamment loin de la partie centrale pour éviter leur échauffement, ils sont par exemple situés à au moins 5 mm de la partie centrale 102.1.

On pourrait envisager qu'une seule extrémité du corps soit en matériau isolant thermique, par exemple l'extrémité comportant le canal ou les canaux d'alimentation afin d'éviter les risques d'auto-inflammation. Le module de combustion selon le premier mode de réalisation est de préférence mis en oeuvre lorsque la température dans de la chambre est au plus de l'ordre de 600°C. Lorsque la température dans la chambre est de l'ordre de 1000°C, le module de combustion selon le deuxième mode de réalisation est préféré.

Sur les figures 3A et 3B, on peut voir un autre exemple d'un module de combustion M3 selon le deuxième mode de réalisation.

Le module M3 comporte deux chambres de combustion C1, C2 connectées en parallèle aux sources de gaz et à l'évacuation des gaz de combustion.

Dans cet exemple, les premiers canaux d'alimentation 106 et les deuxièmes canaux d'alimentation 108 sont sensiblement tangents à la surface extérieure de la chambre de combustion.

Les premiers canaux d'alimentation 106 sont connectés à un canal commun 111 s'étendant transversalement par rapport à l'axe longitudinal X, lui-même connecté à un canal 118 perpendiculaire au canal commun 112 et débouchant dans l'une des faces 2.1.

Les deuxièmes canaux d'alimentation 108 sont connectés à un canal commun 112 s'étendant transversalement par rapport à l'axe longitudinal X lui-même connecté à un canal 114 perpendiculaire au canal commun 112 et débouchant dans l'autre des faces 102.1.

Les deux canaux d'évacuation 110 sont connectés entre eux et sortent par un canal commun 116, par exemple en haut du bloc isolant.

Dans chacune des deux chambres, les entrées de gaz sont diamétralement opposées. Elles entrainent un mouvement des gaz dans le sens horaire dans la chambre située en haut dans la représentation de la figure 3B et dans le sens antihoraire dans la chambre située en bas dans la représentation de la figure 3B.

Cet exemple de réalisation présente l'avantage de réduire le nombre de canaux débouchant à l'extérieur du corps réduisant ainsi les pertes thermiques vers l'extérieur.

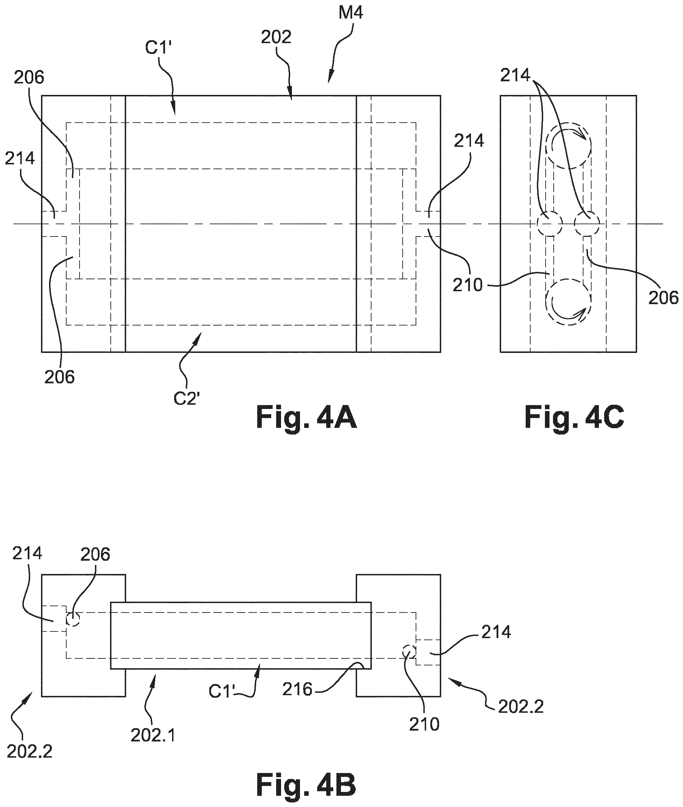

Sur les figures 4A à 4C, on peut voir un autre exemple de réalisation d'un module M4 selon le deuxième mode de réalisation.

Le module M4 comporte un corps 202 et deux chambres de combustion C1' et C2'. Ces deux chambres de combustion C1' et C2' diffèrent des chambres C1 et C2 en ce qu'elles comportent chacune un seul canal d'alimentation 206. Le canal 206 est orienté sensiblement tangentiellement par rapport à la paroi de la chambre de combustion. Le corps comporte un canal d'évacuation 210 pour chaque chambre.

Les deux parties d'extrémité 202.2 ont des formes identiques. Elles comportent un orifice 214 débouchant dans une face d'extrémité 2.2, un canal commun s'étendant transversalement par rapport à l'axe X et débouchant dans les chambres, soit pour les alimenter soit pour évacuer les gaz. Des conduits sont connectés aux orifices 214. Le conduit d'alimentation est connecté à une source de mélange de gaz combustible et de gaz comburant.

Sur la figure 4B, les deux orifices 214 sont dans deux plans différents. En variante, on pourrait prévoir qu'ils soient dans le même plan.

Cet exemple de réalisation présente l'avantage de réduire encore le nombre de connexions vers l'extérieur, réduisant les pertes thermiques et simplifiant la fabrication. En outre, les connexions vers l'extérieur débouchent avantageusement dans les faces d'extrémité longitudinales et non dans les faces de plus grande surface, leur surface n'est donc pas réduite. En effet, ces faces sont généralement exploitées pour la conversion d'énergie, par exemple dans le cas d'un système solaire hybride et il est utile d'avoir la plus grande surface disponible par exemple pour disposer des modules thermoélectriques ou des cellules thermophotovoltaïques

Il sera compris que les modules M1, M2, M3 et M4 peuvent comporter plus que deux chambres de combustion. Lorsque les chambres sont connectées les unes aux autres comme dans les modules M3 et M4, les connexions sont réalisées de préférence dans des plans différents.

En outre les modules M3 et M4 pourraient être réalisés avec un corps monolithique en matériau conducteur thermique, par exemple par compression isostatique à chaud ou par impression 3D. On pourrait aussi envisager de réaliser les parties longitudinales dans le même matériau que la partie centrale afin de simplifier la fabrication.

Comme on peut le voir sur la figure 4C, les parties longitudinales 202.2 comportent un évidement 216 dans leur face en contact avec la partie centrale 202.1. Celui-ci présente des dimensions suffisantes pour permettre d'emboiter les extrémités longitudinales de la partie centrale 202.1 dans les parties longitudinales 202.2.

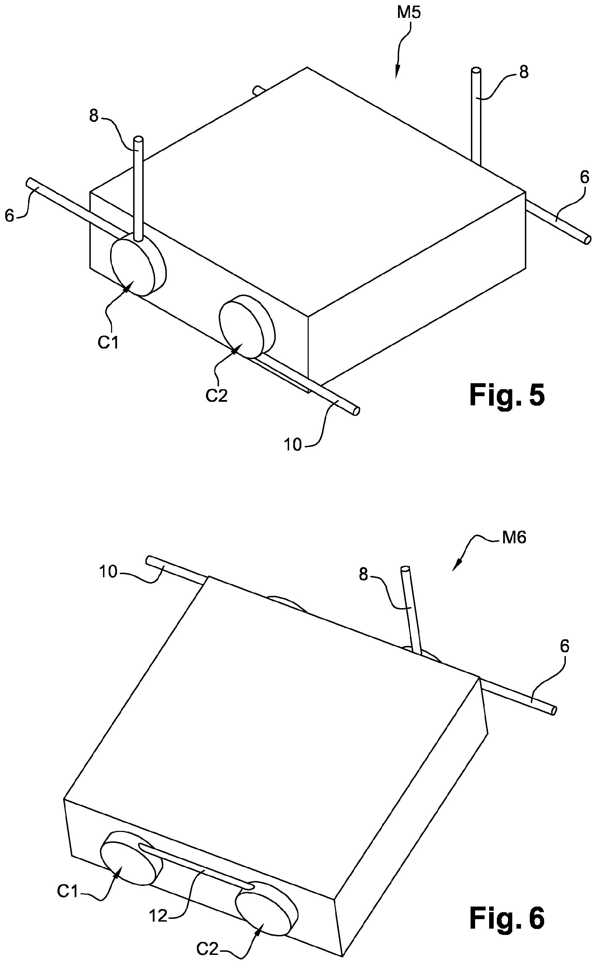

Sur la figure 5, on peut voir un module M5 selon une autre variante de réalisation d'un module selon le premier mode de réalisation, comportant deux chambres de combustion C1 et C2, chaque chambre ayant ses premier 6, 8 et deuxième canaux d'alimentation situés à une extrémité longitudinale du corps opposée à celle comprenant les premier et deuxième canaux d'alimentation de l'autre chambre de combustion et de même pour les canaux d'évacuation 10. Cette variante permet d'améliorer l'uniformité de température du corps comprenant les deux chambres.

Sur la figure 6, on peut voir un module M6 selon un autre exemple de réalisation d'un module selon le premier mode de réalisation comportant deux chambres de combustion C1 et C2 connectées en série par une connexion 12, ainsi la chambre C1 alimente la chambre C2. Cette réalisation allonge la chambre C1 en injectant le mélange en partie brûlé dans la chambre C2 afin d'atteindre une combustion complète ou quasi-complète.

Les variantes des figures 5 et 6 s'appliquent au deuxième mode de réalisation.

Par exemple, pour un module alimenté en un mélange H₂/air ou H₂/CH₄/air, le corps peut avoir les dimensions suivantes : une longueur = 33 mm, une largeur = 33 mm, une épaisseur = 5 mm et comporter deux chambres de combustion de diamètre = 3 mm.

Il a été déterminé, dans le cas d'un module à deux chambres de combustion tourbillonnaire ayant chacune un diamètre D de 6 mm et une longueur L de 33 mm pour un corps ayant une épaisseur de 9 mm. Les chambres sont alimentées en H₂ et O₂ avec une puissance injectée de 400W, cette puissance correspond à la puissance thermique libérée par la combustion supposée complète des deux gaz H₂ et O₂ injectés, on obtient sur la surface extérieure du module une température moyenne à l'équilibre de 1204K.

Il est possible d'atteindre des températures plus élevées en augmentant la section des canaux d'alimentation du fait de la grande facilité de combustion de l'hydrogène.

Par ailleurs, pour un module alimenté en un mélange CH₄/air ou en Biogaz/air, le corps peut avoir les dimensions suivantes : une longueur = 33 mm, une largeur = 33 mm, une épaisseur = 14 mm et comporter deux chambres de combustion de diamètre = 11 mm

Dans le cas d'un module à deux chambres de combustion tourbillonnaire ayant chacune un diamètre D de 11 mm et une longueur L de 33 mm (rapport L/D = 3) pour un corps ayant une épaisseur de 14 mm. Les chambres sont alimentées en CH₄ et O₂ avec une puissance injectée de 400 W, on obtient une combustion stable et une température moyenne à l'équilibre de 1126K sur la surface extérieure du module.

Le rapport longueur/diamètre est de préférence compris entre 3 et 10.

Grâce au module selon l'invention, on arrive à obtenir une combustion stable du CH₄.

Grâce à l'invention, on obtient une combustion complète des gaz dans un volume réduit puisque la mise en oeuvre de chambres de combustion tourbillonnaires permet de réduire la longueur des chambres tout en augmentant le temps de résidence des gaz.

Dans le mode avantageux mettant en oeuvre un ou des extrémités isolantes thermiques, on réduit voire on supprime le risque d'auto-inflammation dans les conduits d'alimentation. En outre on réduit les pertes thermiques, ce qui est favorable à l'augmentation en température du module. En mettant en oeuvre deux chambres de combustion ou plus on contribue à uniformiser les températures à la surface du module, par exemple en disposant celles-ci de manière déterminée par exemple plus près des bords latéraux pour compenser les pertes thermiques.

Sur la figure 8, on peut voir une représentation schématique d'un exemple d'un système solaire comportant un module de combustion selon l'invention. Le rayonnement solaire est schématisé par les flèches R.

Le système solaire comporte des moyens de concentration 18 du rayonnement solaire, un module de combustion M1 disposé à l'opposé des moyens de concentration 18 par rapport au soleil de sorte que la face supérieure du corps soit illuminée par le rayonnement solaire concentré et des modules thermoélectriques MTH dont la face chaude est en contact thermique avec la face inférieure du corps du module. Ces modules peuvent être remplacés par des cellules thermophotovoltaïques placées en face de la surface chaude.

Le système comporte des moyens de commande UC de la combustion de la chambre en fonctionnement du rayonnement solaire concentré de sorte à maintenir une température sensiblement constante sur la face inférieure du corps du module de combustion.

De préférence, la surface supérieure du module destinée à recevoir le flux solaire concentré, et en particulier la surface supérieure du corps est fonctionnalisée avec un absorbeur solaire haute température pour permettre l'échauffement par absorption du rayonnement solaire. Par exemple il peut s'agir d'un absorbeur interférentiel déposé sur la surface supérieure, tel que le TiAlN/AlN/SiO₂ ou un matériau réfractaire nanostructuré tel que le molybdène, le tantale ou le tungstène.

De préférence, la surface inférieure du module, en particulier la surface inférieure du corps, est fonctionnalisée avec un émetteur sélectif tel qu'un empilement de W/Al₂O₃ ou de Si/SiO₂ ou tel qu'un matériau réfractaire nanostructuré tel que le molybdène, le tantale ou le tungstène.

Les surfaces latérales du module, en particulier celles du corps peuvent avantageusement être fonctionnalisé au moyen d'un matériau à basse émissivité tel qu'un matériau réfractaire.

Les moyens de concentration du rayonnement sont par exemple un miroir ou une lentille de Fresnel.

Les modules thermoélectriques peuvent par exemple être remplacés par tout dispositif apte à convertir la chaleur en électricité ou une autre forme d'énergie, par exemples une ou des cellules thermophotovoltaïques.

De manière avantageuse, dans le cas d'une application à un système solaire, la chaleur initiale requise pour démarrer la combustion est fourni par le rayonnement solaire concentré sur le corps.

Le fonctionnement du système solaire va maintenant être décrit.

Lorsque le rayonnement solaire est suffisant, il chauffe le corps du module de combustion en frappant sa face supérieure après avoir été concentré.

La chaleur est transmise par conduction à travers le corps jusqu'à la face inférieure grâce au matériau du corps entre les chambres de combustion, un gradient thermique apparaît alors dans les modules thermoélectriques et de l'électricité est produite.

Si le rayonnement est insuffisant, par exemple en cas de passage nuageux ou en période de nuit, des gaz sont brûlés dans les chambres de combustion, une chaleur est produite, qui complète celle produite par le rayonnement solaire ou pallie son absence. Un gradient thermique apparaît alors dans les modules thermoélectriques et de l'électricité est produite.

Des exemples de procédé de réalisation vont maintenant être décrits.

Pour réaliser le module des figures 1A et 1B, le corps est réalisé par usinage.

Lors d'une étape suivante, les deux chambres sont usinées dans le corps à partir d'une extrémité longitudinale. Par exemple, le corps est percé de part en part.

Ensuite, les extrémités de la chambre par laquelle a eu lieu l'usinage sont fermées par des plaques, par exemple solidarisées par brasage ou soudage.

Lors d'une étape suivante, les canaux d'alimentation et d'évacuation sont percés.

Ensuite les conduits d'alimentation et d'évacuation sont connectés aux canaux d'alimentation et d'évacuation respectivement, par brasage ou soudage.

Pour réaliser les modules des figures 2A à 4C, la partie centrale en matériau conducteur thermique et les parties longitudinales en matériau isolant sont réalisées par usinage.

Lors d'une étape suivante, les deux chambres sont usinées dans le corps à partir d'une extrémité longitudinale.

Lors d'une étape suivante, les canaux d'alimentation et d'évacuation sont percés dans les parties longitudinales.

Lors d'une étape suivante, les parties longitudinales sont solidarisées à la partie centrale, par exemple par brasage ou soudage.

Ensuite les conduits d'alimentation et d'évacuation sont connectés aux canaux d'alimentation et d'évacuation respectivement, par bradage ou soudage.

Dans le cas où les conduits seraient de forme complexe, les connecteurs peuvent être réalisés par une technologie de moulage par injection de poudre céramique, pour mouler par exemple la zircone, l'oxyde d'aluminium, le nitrure de silicium, la mullite.

Lors d'une étape suivante, le catalyseur de combustion peut être déposé sur la surface intérieure des chambres de combustion par imprégnation liquide ou par dépôt chimique en phase vapeur.

Lors d'une étape suivante, le corps et les connecteurs sont solidarisés par exemple par brasage ou par soudage.

Lors d'une étape suivante, les tubes d'alimentation et d'évacuation sont solidarisés aux connecteurs par exemple soudage ou par brasage.

On peut envisager de solidariser les tubes sur les connecteurs, avant de solidariser les connecteurs au corps.

Dans le cas où les chambres sont connectées entre elles, on réalise la connexion entre les chambres. Ceci est réalisable par perçage entre les deux chambres à partir de l'extérieur et ensuite par bouchage de l'orifice entre l'extérieur et l'intérieur d'une des chambres par une pièce par exemple brasée ou soudée.

Comme cela a été décrit ci-dessus, le système de combustion selon l'invention est particulièrement adapté à la réalisation d'un système solaire hybride dans lequel la ou les chambres de combustion permettent de maintenir une température constante en vue d'une conversion thermoélectrique ou thermophotovoltaïque.

D'une part le module offre une grande surface pouvant être échauffée par le rayonnement solaire concentré et une grande surface pouvant échanger de la chaleur avec des modules thermoélectriques ou rayonné vers des cellules thermophotovoltaïques.

D'autre part, la mise en oeuvre de plusieurs chambres de combustion disposées les unes à côtés des autres ménage des zones de matériau conducteur thermique entre les deux plus grandes surfaces permettant la conduction de la chaleur de la surface échauffée par le rayonnement solaire concentré et celle échangeant avec les modules thermoélectriques ou rayonnant ver les cellules thermophotovoltaïques.

Le système de combustion peut être utilisé pour générer de la chaleur.

Une autre application peut être la réalisation de microsystèmes de combustion pour réaliser des microsources de chaleur.

Une autre application peut être la réalisation de microsystèmes de combustion pour de systèmes de micropropulsion.

## Revendications

1. Module de combustion comportant un corps (2, 102, 202) comprenant une ou plusieurs chambres de combustion (C1, C2, C1', C2'), au moins un premier canal d'alimentation (6, 106, 206) de la chambre de combustion ou de chaque chambre de combustion à une extrémité longitudinale de la chambre de combustion ou de chaque chambre de combustion, au moins un canal d'évacuation (10, 110, 210) de ladite chambre de combustion ou de chaque chambre de combustion à une autre extrémité longitudinale de la chambre de combustion ou de chaque chambre de combustion, la chambre de combustion ou chaque chambre de combustion étant du type chambre de combustion à turbulence, et comprenant une zone de combustion délimitée (4) par une surface latérale,
**caractérise en ce que** ledit premier canal d'alimentation (6, 106, 206) est disposé par rapport à la surface latérale de sorte que le au moins un gaz injecté dans la chambre soit injecté sensiblement tangentiellement à la surface latérale, le corps comportant une partie de combustion en un matériau présentant une première conductivité thermique, de préférence ayant une conductivité thermique supérieure à 100 W/m.K, ladite partie de combustion comprenant la zone de combustion, le corps comprenant également au moins une partie d'extrémité en un matériau présentant une deuxième conductivité thermique plus faible que la partie de combustion, ladite partie d'extrémité comportant une première extrémité longitudinale de la chambre de combustion ou de chaque chambre de combustion.

2. Module de combustion selon la revendication 1, comprenant un deuxième canal d'alimentation (8, 108) de la chambre de combustion ou de chaque chambre de combustion au niveau de la première extrémité longitudinale de la chambre de combustion ou de chaque chambre de combustion, le deuxième canal d'alimentation étant avantageusement disposé par rapport à la surface latérale de sorte que le au moins un gaz injecté dans la chambre soit injecté tangentiellement à la surface latérale et le canal d'évacuation soit orientée tangentiellement à la surface latérale.

3. Module de combustion selon la revendication 1 ou 2, dans lequel le corps comporte deux parties d'extrémité (102.2, 202.2) en un matériau présentant une conductivité thermique plus basse que la partie de combustion (102.1, 202.2), chacune des parties d'extrémité (102.2, 202.2) comportant une extrémité longitudinale de la chambre de combustion ou de chaque chambre de combustion , avantageusement la ou les parties d'extrémité (202.2) étant emboitée(s) sur la partie de combustion (202.1) et/ou étant solidarisée(s) à celle-ci par brasage ou soudage.

4. Module de combustion selon l'une des revendication 1, 2 ou 3, dans lequel la partie de combustion est en SiC et la ou les parties d'extrémité est ou sont en zircone.

5. Module de combustion selon l'une des revendications 1 à 4, dans lequel la surface latérale de la chambre de combustion comporte au moins une rainure hélicoïdale.

6. Module de combustion selon l'une des revendications 1 à 5, dans lequel le rapport entre la longueur de la chambre de combustion ou de chaque chambre de combustion et le diamètre de la chambre de combustion ou de chaque chambre de combustion est compris entre 2 et 10.

7. Module de combustion selon l'une des revendications précédentes, dans lequel le corps comporte au moins une entrée de connexion destinée à être connectée à au moins une source d'au moins un gaz et des moyens d'alimentation en parallèle des chambres de combustion connectées à l'entrée de connexion, et/ou dans lequel le corps comporte une sortie de connexion destinée à être connectée à une zone de récupération des gaz de combustion et des moyens d'évacuation connectant les canaux d'évacuation à la sortie d'évacuation.

8. Module de combustion selon l'une des revendications 1 à 6, dans lequel les chambres de combustion (C1 C2) sont connectées en série.

9. Module de combustion selon l'une des revendications 1 à 8, dans lequel une des parties d'extrémité (102.2) comporte les premières extrémités longitudinales de toutes les chambres de combustion, ou dans lequel une des parties d'extrémité comporte la première extrémité d'une chambre de combustion et les deuxièmes extrémités des autres chambres de combustion ou des premières extrémités d'une partie des chambres de combustion et des deuxièmes extrémités de l'autre partie des chambres de combustion.

10. Dispositif de combustion comportant au moins un module selon l'une des revendications précédentes, une source de combustible et une source de comburant, et dans lequel la source de combustible est connectée au premier canal d'alimentation ou au deuxième canal d'alimentation de la chambre de combustion ou de chaque chambre de combustion et la source de comburant est connecté au deuxième canal d'alimentation ou au premier canal d'alimentation de la chambre de combustion ou de chaque chambre de combustion respectivement, ledit dispositif comportant avantageusement des moyens de prémélange du comburant et du combustible connectés au premier canal d'alimentation.

11. Dispositif de combustion selon la revendication précédente, dans lequel la source de combustible est une source de H₂ et/ou de CH₄ et/ou de biogaz et la source de comburant est une source d'oxygène ou d'air.

12. Système solaire hybride comportant des moyens de concentration (C) du rayonnement solaire, au moins un module de combustion (MC) selon l'une des revendications 1 à 9 ou un dispositif de combustion selon la revendication 10, le module ou le dispositif étant disposé de sorte que les rayonnement concentré éclaire une face du corps et des moyens de conversion (MTH) d'une énergie thermique en électricité sur une face opposée à celle éclairée par le rayonnement solaire concentré, et des moyens de commande (UC) de la combustion dans le module de combustion en fonction du rayonnement solaire concentré.

13. Système solaire hybride selon la revendication précédente, dans lequel les moyens de concentration du rayonnement solaire comportent au moins un miroir ou une lentille de Fresnel, les moyens de conversion (MTH) d'une énergie thermique en électricité comportant avantageusement au moins un module thermoélectrique et/ou au moins une cellule thermophotovoltaïque.

## Patentansprüche

1. Verbrennungsmodul, umfassend ein Gehäuse (2, 102, 202), umfassend eine oder mehrere Verbrennungskammern (C1, C2, C1', C2'), wenigstens einen ersten Versorgungskanal (6, 106, 206) der Verbrennungskammer oder jeder Verbrennungskammer an einem Längsende der Verbrennungskammer oder jeder Verbrennungskammer, wenigstens einen Ableitungskanal (10, 110, 210) der Verbrennungskammer oder jeder Verbrennungskammer an einem anderen Längsende der Verbrennungskammer oder jeder Verbrennungskammer, wobei die Verbrennungskammer oder jede Verbrennungskammer vom Typ Turbulenzverbrennungskammer ist, und eine Verbrennungszone (4) umfasst, die durch eine laterale Oberfläche begrenzt ist, **dadurch gekennzeichnet, dass** der erste Versorgungskanal (6, 106, 206) mit Bezug zu der lateralen Oberfläche derart angeordnet ist, dass das wenigstens eine in die Kammer injizierte Gas im Wesentlichen tangential zu der lateralen Oberfläche injiziert wird, wobei das Gehäuse einen Verbrennungsteil aus einem Material umfasst, das eine erste thermische Leitfähigkeit aufweist, und vorzugsweise eine thermische Leitfähigkeit größer als 100 W/m.K hat, wobei der Verbrennungsteil die Verbrennungszone umfasst, wobei das Gehäuse ferner wenigstens einen Endteil aus einem Material umfasst, das eine zweite thermische Leitfähigkeit aufweist, die kleiner als bei dem Verbrennungsteil ist, wobei der Endteil ein erstes Längsende der Verbrennungskammer oder jeder Verbrennungskammer umfasst.

2. Verbrennungsmodul nach Anspruch 1, umfassend einen zweiten Versorgungskanal (8, 108) der Verbrennungskammer oder jeder Verbrennungskammer im Bereich des ersten Längsendes der Verbrennungskammer oder jeder Verbrennungskammer, wobei der zweite Versorgungskanal vorzugweise mit Bezug zu der lateralen Oberfläche derart angeordnet ist, dass das wenigstens eine Gas, das in die Kammer injiziert wird, tangential zu der lateralen Oberfläche injiziert wird, und der Ableitungskanal tangential zu der lateralen Oberfläche orientiert ist.

3. Verbrennungsmodul nach Anspruch 1 oder 2, wobei das Gehäuse zwei Endteile (102.2, 202.2) aus einem Material umfasst, das eine niedrigere thermische Leitfähigkeit als der Verbrennungsteil (102.1, 202.2) aufweist, wobei jeder der Endteile (102.2, 202.2) ein Längsende der Verbrennungskammer oder jeder Verbrennungskammer umfasst, wobei vorzugsweise der oder die Endteile (202.2) auf den Verbrennungsteil (202.1) gefügt ist/sind, und/oder durch Löten oder Schweißen mit diesem verbunden ist/sind.

4. Verbrennungsmodul nach einem der Ansprüche 1, 2 oder 3, wobei der Verbrennungsteil aus SiC ist, und wobei der oder die Endteile aus Zirkon ist oder sind.

5. Verbrennungsmodul nach einem der Ansprüche 1 bis 4, wobei die laterale Oberfläche der Verbrennungskammer wenigstens eine schraubenförmige Rille umfasst.

6. Verbrennungsmodul nach einem der Ansprüche 1 bis 5, wobei das Verhältnis zwischen der Länge der Verbrennungskammer oder jeder Verbrennungskammer und dem Durchmesser der Verbrennungskammer oder jeder Verbrennungskammer zwischen 2 und 10 enthalten ist.

7. Verbrennungsmodul nach einem der vorhergehenden Ansprüche, wobei das Gehäuse wenigstens einen Verbindungseingang umfasst, der dazu ausgelegt ist, mit wenigstens einer Quelle von wenigstens einem Gas verbunden zu sein, und Mitteln zur Versorgung parallel zu den Verbrennungskammern, die mit dem Verbindungseingang verbunden sind, und/oder wobei das Gehäuse einen Verbindungsausgang umfasst, der dazu ausgelegt ist, mit einer Zone zur Wiedergewinnung der Verbrennungsgase verbunden zu sein, und Mitteln zur Ableitung, die die Ableitungskanäle mit dem Ableitungsausgang verbinden.

8. Verbrennungsmodul nach einem der Ansprüche 1 bis 6, wobei die Verbrennungskammern (C1, C2) in Reihe verbunden sind.

9. Verbrennungsmodul nach einem der Ansprüche 1 bis 8, wobei einer der Endteile (102.2) die ersten Längsenden von allen Verbrennungskammern umfasst, oder wobei einer der Endteile das erste Ende einer Verbrennungskammer und die zweiten Enden der anderen Verbrennungskammern oder erste Enden eines Teils der Verbrennungskammern und zweite Enden des anderen Teils der Verbrennungskammern umfasst.

10. Verbrennungsvorrichtung, umfassend wenigstens ein Modul nach einem der vorhergehenden Ansprüche, eine Brennstoffquelle und eine Sauerstoffträgerquelle, und wobei die Brennstoffquelle mit dem ersten Versorgungskanal oder mit dem zweiten Versorgungskanal der Verbrennungskammer oder jeder Verbrennungskammer verbunden ist, und wobei die Sauerstoffträgerquelle mit dem zweiten Versorgungskanal oder mit dem ersten Versorgungskanal der Verbrennungskammer oder jeder Verbrennungskammer jeweils verbunden ist, wobei die Vorrichtung vorzugsweise Mittel zum Vormischen des Sauerstoffträgers und des Brennstoffs umfasst, die mit dem ersten Versorgungskanal verbunden sind.

11. Verbrennungsvorrichtung nach dem vorhergehenden Anspruch, wobei die Brennstoffquelle eine Quelle von H₂ und/oder von CH₄ und/oder von Biogas ist, und wobei die Sauerstoffträgerquelle eine Quelle von Sauerstoff oder von Luft ist.

12. Hybridsolarsystem, umfassend Mittel (C) zur Konzentrierung der Sonnenstrahlung, wenigstens ein Verbrennungsmodul (MC) nach einem der Ansprüche 1 bis 9 oder eine Verbrennungsvorrichtung nach Anspruch 10, wobei das Modul oder die Vorrichtung derart angeordnet ist, dass die konzentrierte Strahlung eine Fläche des Gehäuses bestrahlt, sowie Mittel (MTH) zur Umwandlung einer thermischen Energie in Elektrizität auf einer Fläche entgegengesetzt zu der durch die konzentrierte Sonnenstrahlung bestrahlte, sowie Mittel (UC) zur Steuerung der Verbrennung in dem Verbrennungsmodul als Funktion der konzentrierten Sonnenstrahlung.

13. Hybridsolarsystem nach dem vorhergehenden Anspruch, wobei die Mittel zur Konzentration der Sonnenstrahlung wenigstens einen Spiegel oder eine Fresnel-Linse umfassen, wobei die Mittel (MTH) zur Umwandlung einer thermischen Energie in Elektrizität vorzugsweise wenigstens ein thermoelektrisches Modul und/oder wenigstens eine thermophotovoltaische Zelle umfassen.

## Claims

1. Combustion module comprising a body (2, 102, 202) comprising one or more combustion chambers (C1, C2, C1', C2'), at least one first supply channel (6, 106, 206) of the combustion chamber or of each combustion chamber at a longitudinal end of the combustion chamber or of each combustion chamber, at least one discharge channel (10, 110, 210) of said combustion chamber or of each combustion chamber at another longitudinal end of the combustion chamber or of each combustion chamber, with the combustion chamber or each combustion chamber being of the turbulence combustion chamber type, and comprising a combustion zone (4) defined by a lateral surface, **characterised in that** said first supply channel (6, 106, 206) is arranged in relation to the lateral surface such that the at least one gas injected into the chamber is injected substantially tangentially to the lateral surface, with the body comprising a combustion portion made from a material that has a first thermal conductivity, preferably having a thermal conductivity greater than 100 W/m.K, said combustion portion comprising the combustion zone, with the body also comprising at least one end portion made from a material that has a second thermal conductivity that is lower than the combustion portion, said end portion comprising a first longitudinal end of the combustion chamber or of each combustion chamber.

2. Combustion module according to claim 1, comprising a second supply channel (8, 108) of the combustion chamber or of each combustion chamber on the first longitudinal end of the combustion chamber or of each combustion chamber, with the second supply channel being advantageously arranged in relation to the lateral surface such that the at least one gas injected into the chamber is injected tangentially to the lateral surface and the discharge channel is oriented tangentially to the lateral surface.

3. Combustion module according to claim 1 or 2, wherein the body comprises two end portions (102.2, 202.2) made from a material that has a thermal conductivity lower than the combustion portion (102.1, 202.2), with each one of the end portions (102.2, 202.2) comprising a longitudinal end of the combustion chamber or of each combustion chamber, advantageously the end portion or portions (202.2) being nested on the combustion portion (202.1) and/or being attached to the latter by brazing or welding.

4. Combustion module according to one of claims 1, 2 or 3, wherein the combustion portion is made from SiC and the end portion or portions are made of zirconia.

5. Combustion module according to one of claims 1 to 4, wherein the lateral surface of the combustion chamber comprises at least one helical groove.

6. Combustion module according to one of claims 1 to 5, wherein the ratio between the length of the combustion chamber or of each combustion chamber and the diameter of the combustion chamber or of each combustion chamber is between 2 and 10.

7. Combustion module according to one of the preceding claims, wherein the body comprises at least one inlet connection intended to be connected to at least one source of at least one gas and means for supplying in parallel combustion chambers connected to the inlet connection, and/or wherein the body comprises a connection outlet intended to be connected to a zone for recovering combustion gases and means for discharging that connect the discharge channels to the discharge outlet.

8. Combustion module according to one of claims 1 to 6, wherein the combustion chambers (C1, C2) are connected in series.

9. Combustion module according to one of claims 1 to 8, wherein one of the end portions (102.2) comprises the first longitudinal ends of all of the combustion chambers, or wherein one of the end portions comprises the first end of a combustion chamber and the second ends of the other combustion chambers or of the first ends of a portion of the combustion chambers and of the second ends of the other portion of the combustion chambers.

10. Combustion device comprising at least one module according to one of the preceding claims, a source of fuel and a source of combustion agent, and wherein the source of fuel connected to the first supply channel or to the second supply channel of the combustion chamber or of each combustion chamber and the combustion source agent is connected to the second supply channel or to the first supply channel of the combustion chamber or of each combustion chamber respectively, said device advantageously comprising means for premixing combustion agent and fuel connected to the first supply channel.

11. Combustion device according to the preceding claim, wherein the source of fuel is a source of H₂ and/or CH₄ and/or biogas and the source of combustion agent is a source of oxygen or of air.

12. Hybrid solar system comprising means for concentrating (C) the solar radiation, at least one combustion module (MC) according to one of claims 1 to 9 or a combustion device according to claim 10, with the module or the device being arranged in such a way that the concentrated radiation illuminates a face of the body and means for converting (MTH) a thermal energy into electricity on a face opposite the one illuminated by the concentrated solar radiation, and means for controlling (UC) the combustion in the combustion module according to the concentrated solar radiation.

13. Hybrid solar system according to the preceding claim, wherein the means for concentrated the solar radiation comprise at least one mirror or a Fresnel lens, with the means for converting (MTH) from a thermal energy into electricity advantageously comprising at least one thermoelectrical module and/or at least one thermophotovoltaic cell.
